# EUROPEAN PATENT SPECIFICATION

(11) **EP 1 733 801 B1**
(45) Date of publication and mention of the grant of the patent: **15.09.2010**
(21) Application number: 04748081.9
(22) Date of filing: 23.07.2004
(51) Int. Cl.: B05C 3/08

(54) **COATING DEVICE**
BESCHICHTUNGSVORRICHTUNG
DISPOSITIF DE REVETEMENT

(30) Priority: 09.04.2004 JP 2004115672
(43) Date of publication of application: 20.12.2006
(73) Proprietor: Kabushiki Kaisha Powrex, Itami-shi Hyogo 664-0831 (JP)
(72) Inventor: HASEGAWA, Koji, c/o KABUSHIKI KAISHA POWREX, Itami-shi, Hyogo 6640831 (JP); NAKANO, Yuichi, c/o KABUSHIKI KAISHA POWREX, Itami-shi, Hyogo 6640831 (JP); MATSUURA, Hiroshi, c/o KABUSHIKI KAISHA POWREX, Itami-shi, Hyogo 6640831 (JP)
(74) Representative: Mischung, Ralf
(86) International application number: PCT/JP2004/010873
(87) International publication number: WO 2005/099912

(56) References cited:
- EP-A- 0 088 317
- EP-A- 0 526 394
- WO-A-88/01904
- WO-A-2004/022246
- DE-A1- 2 249 863
- JP-A- 5 309 253
- JP-A- 60 244 330
- JP-A- 2004 148 292
- JP-B1- 46 010 878
- JP-U- 61 000 835
- US-A- 3 442 691
- US-A- 3 834 347
- US-A- 5 397 393

## Description

### BACKGROUND OF THE INVENTION

### 1. Field of the invention

The present invention relates to a coating apparatus for performing coating, mixing, drying, and the like of medical, food, pesticidal products, and the like of a granular form, and more particularly, to a coating apparatus having a rotating drum to be driven to rotate about its axis.

### 2. Description of the Related Art

Coating apparatuses having a rotating drum have been used for performing film coating, sugar coating, and the like to medical, food, pesticidal products, and the like, which are prepared as tablets, soft capsules, pellets, grains, and in other similar forms (hereinafter collectively referred to as "particles").

For example, the following JP 2001-58125 A, Japanese Utility Model Examined Publication No. Sho 43-19511, JP 01-41337 B, JP 07-328408 A, Japanese Utility Model Application Laid-open No. Sho 56-7569, JP 55-5491 B, and JP 58-40136 A disclose this type of coating apparatus.

As shown in FIG. 10, JP 2001-58125 A discloses a coating apparatus having a ventilated-type rotating drum 30 to be driven to rotate about a horizontal axis A. The rotating drum 30 is composed of a polygonal cylindrical peripheral wall 30c, one end wall 30a formed in a polygonal pyramid shape extending from one end of the peripheral wall 30c in an axial direction toward one side, and the other end wall 30b formed in a polygonal pyramid shape extending from the other end of the peripheral wall 30c in the axial direction toward the other side. A porous plate 33 is attached to each surface of the peripheral wall 30c so that the peripheral wall 30c is ventilated through the porous portions of the porous plates 33. A jacket 34 is attached on the outer periphery of each porous plate 33, and a ventilation channel 35 is formed between the jacket 34 and the porous plate 33.

At the other end of the rotating drum 30 where a rotary drive mechanism including a motor 36 and others is installed, a distributor 37 is disposed for controlling the ventilation of process gas such as dry air for the rotating drum 30. The distributor 37 has a function of communicating the ventilation channels 35 that have come to a preset location as the rotating drum 30 rotates to an air inlet duct 38 and to an air outlet duct 39, respectively.

For example, when one of the ventilation channels 35 comes to an upper portion of the rotating drum 30 as it rotates, this ventilation channel 35 communicates to the air inlet duct 38, while, when one of the ventilation channels 35 comes to a lower portion of the rotating drum, this ventilation channel 35 communicates to the air outlet duct 39. Thus, the process gas introduced from the air inlet duct 38 into the ventilation channel 35 at the upper portion of the rotating drum 30 flows into the rotating drum 30 through the porous plate 33 at the upper portion of the peripheral wall 30c, passes through inside a particle layer (rolling bed) 31, flows out into the ventilation channel 35 through the porous plate 33 at the lower portion of the peripheral wall 30c, and is exhausted into the air outlet duct 39 through the ventilation channel 35.

Japanese Utility Model Examined Publication No. Sho 43-19511, JP 01-41337 B, JP 07-328408 A, and Japanese Utility Model Application Laid-open No. Sho 56-7569 also disclose a coating apparatus having a ventilated-type rotating drum. Similarly to the apparatus of JP 2001-58125 A, porous portions are provided in a peripheral wall of the rotating drum for ventilation, and these porous portions are covered by jackets from outside, thereby forming ventilation channels therebetween.

The coating apparatus disclosed in any one of JP 55-5491 B and JP 58-40136 A has a rotating drum that is not ventilated. The rotating drum disclosed in JP 55-5491 B or JP 58-40136 A has a circular cross section and a bulged axial center; it is referred to as "an onion pan" because of its shape. In general, this rotating drum is disposed such that its axis is inclined to the horizontal. While the rotating drum itself is not ventilated, the ventilation of the inside is achieved through a supply pipe and an exhaust pipe. With the construction shown in FIG. 3 of JP 55-5491 B, for example, the supply pipe is inserted into the rotating drum from an opening at one end thereof for supplying air, while the exhaust pipe is connected to the opening at one end of the rotating drum for exhausting air. With such ventilation system, however, the process gas such as dry air makes contact only with the surface layer of the particle layer, because of which sufficient ventilation is not achieved to the inside of the particle layer. For this reason, JP 55-5491 B discloses another construction as shown in FIGS. 1 and 2 in which the air outlet of the exhaust pipe is embedded in the particle layer so as to allow the process gas to pass through inside the particle layer.

The coating apparatuses disclosed in JP 2001-58125 A, Japanese Utility Model Examined Publication No. Sho 43-19511, JP 01-41337 B, JP 07-328408 A, and Japanese Utility Model Application Laid-open No. Sho 56-7569 tend to require an elaborate cleaning process after completion of a coating process particularly for the cleaning of the ventilation channels on the inside because of the structure. In this structure, the rotating drum is ventilated through the porous portions (air holes) provided in the peripheral wall, with the ventilation channels being formed between the porous portions and the jackets covering the same from outside.

Moreover, when performing validation on the inside of the ventilation channels after the cleaning, or when wiping off powder or the like of abraded particle grains adhered inside the ventilation channels, the jackets forming the ventilation channels must be removed and then mounted again after the completion of a required procedure, which is troublesome.

Furthermore, when coating particles with sugar liquid or chocolate paste, for example, the rotating drum should preferably be kept at a lower temperature than that of the particles (objects to be processed) in the case of sugar coating, or at a higher temperature than that of the particles in the case of chocolate coating, in order to prevent these coating materials from adhering on the inner wall of the rotating drum. However, the coating apparatuses disclosed in JP 2001-58125 A, Japanese Utility Model Examined Publication No. Sho 43-19511, JP 01-41337 B, JP 07-328408 A, and Japanese Utility Model Application Laid-open No. Sho 56-7569 cannot be cooled or heated from outside of the rotating drum because the ventilation channels are provided on the outside of the rotating drum. Adhesion of coating material on the inner wall of the rotating drum will cause a complex cleaning or validation process after the coating process, and also lead to a loss of the coating material and a decrease in the product yield.

The coating apparatuses disclosed in JP 55-5491 B and JP 58-40136 A use a supply pipe and an exhaust pipe for the ventilation of the rotating drum on the inside because the rotating drum itself is not ventilated. The apparatuses thus entail the following problems. If the air vents of the supply pipe and exhaust pipe are located outside the particle layer, the process gas such as dry air cannot provide ventilation for the inside of the particle layer and it takes a long time to dry the particles, or, the particles may be dried unevenly, resulting in deterioration of the coating quality. On the other hand, if the air vent of the supply pipe or exhaust pipe is embedded in the particle layer so as to resolve this problem, powder or the like of abraded particle grains or coating liquid may adhere to the supply pipe or exhaust pipe and clog the air vent, leading to ventilation failure and requiring a complex cleaning process after the coating process, or it may cause contamination. Further, the supply pipe or exhaust pipe embedded inside will inhibit smooth flow of the particle layer and may cause deterioration of the coating quality.

From EP 1 547 695 A1, a coating device is known, which contains a drum rotating around an inclined axis. Air passes through a layer of granules and flows out into an air outlet through a ring-shaped air vent arranged at a lower side of the drum. Although airflow through the layer may be achieved in a sufficient way, stagnation of particles cannot be avoided with this kind of drum.

### SUMMARY OF THE INVENTION

An object of the present invention is to provide a coating apparatus that is excellent in ease of cleaning and validation after the cleaning.

Another object of the present invention is to provide a coating apparatus that is excellent in quality and efficiency of the coating process.

To achieve the above objects, according to the present invention, there is provided a coating apparatus with the features of claim 1.

According to an embodiment of the coating apparatus of the present invention, the rotating drum is a ventilated type, but the air vents are provided at one end and the other end, and no air passages (porous portions) are provided in the peripheral wall for the ventilation. Accordingly, a complex ventilation structure need not to be provided as with the conventional ventilated-type rotating drum, in which the air passages (porous portions) in the peripheral wall are covered by jackets from outside and ventilation channels are formed therein. That is, an embodiment of the coating apparatus of the present invention includes a ventilated-type rotating drum that does not include air passages (porous portions) in its peripheral wall for the ventilation, or in other words, the rotating drum has an air-tight structure in the peripheral wall, and is not provided with ventilation channels covered by jackets on the outside of the peripheral wall. Thus, the coating apparatus enables easier and more reliable cleaning and validation after the cleaning, as compared to the conventional apparatuses.

One of the air vents at one end and the other end is used as an air inlet, while the other is used as an air outlet; process gas (such as hot air and cool air) is supplied into the rotating drum from the air inlet at one or the other end, passed through the particle layer inside the rotating drum, and exhausted from the air outlet at one or the other end. Thus, sufficient ventilation is provided inside the particle layer, whereby processing of the particle layer such as drying is evenly achieved.

Further, the rotating drum can be cooled or heated from the outside of the peripheral wall, so that the rotating drum may be cooled during sugar coating, for example, using cooling means such as cool water or air, or, it may be heated during chocolate coating using heating means such as hot water or air, or a heater, whereby adhesion of coating materials on the inner wall of the rotating drum can be prevented. The failure rate of the coating products can thereby be reduced and the product yield can be increased, as well as the loss of coating materials can be reduced, and moreover, the cleaning process of the rotating drum on the inside after the coating process is made easy. The rotating drummay be heated during film coating, too, so as to prevent heat dissipation of the process gas (such as dry air) and enhance the drying efficiency, or when using a heat-sensitive coating material, the rotating drum may be cooled so as to prevent adhesion of the coating material on the inner wall of the relating drum. Thus, with the coating apparatus of the present invention, various coating processes such as film coating, sugar coating, and chocolate coating can be performed with high quality and efficiency.

At least one of the cooling means and the heating means should preferably be disposed on the outside of the peripheral wall of the rotating drum, for cooling or heating the rotating drum. As the cooling means, for example, a nozzle or the like may be employed for spraying cooling water or cool air to the outside of the peripheral wall, and as the heating means, for example, a nozzle or the like may be employed for spraying hot water or air to the outside of the peripheral wall. A heater such as an infrared heater or the like may also be employed as the heating means. When cooling or heating the rotating drum, the temperature of the particle layer inside the rotating drum may be measured by some suitable means such as a temperature sensor, and the cooling or heating means may be controlled (the temperature or flow rate of the cooling or heating medium, or the current value or the like may be controlled) based on the measurement results so that the particle layer is kept at a desired temperature.

The rotating drum is disposed such that its axis is inclined to the horizontal. Preferably, the rotating drum should be disposed such that its axis is inclined to the horizontal at a preset angle e. In this case, the preferable range of inclination angle θ of the axis is 20° ≤ θ ≤ 70°, and more preferably 30° ≤ θ ≤ 45°; for example, the angle θ should be set to be 30° or 45°.

Because the axis of the rotating drum is inclined to the horizontal, the volume of the particles that can be processed inside the rotating drum is larger; the production efficiency is improved because of the increased amount of particles per one processing cycle. Further, as the rotating drum rotates around the inclined axis, an axial movement is imparted to the flow of the particles accommodated inside the rotating drum in addition to the movement in the rotating direction with the rotation of the rotating drum, whereby high stirring and mixing effects are achieved for the particle layer.

Meanwhile, in the vicinity of the other end positioned on an inclined lower side, due to gravity, the particles do not sufficiently flow obliquely upward, so a stagnation phenomenon of the particles is likely to occur. However, according to one feature of the present invention, the coating apparatus is provided with a protrusion formed on a central region of an inner surface of the other end. The particles in the vicinity of the other end lifted forward in a rotational direction as the rotation drum rotates comes into contact with a surface of the protrusion when the particles flow by their own weight (gravitationally) backward in the rotational direction. The particles then flow obliquely upward (to the one end side) while being guided by the surface of the protrusion. Therefore, the stagnation phenomenon of the particles is less likely to occur in the vicinity of the other end.

According to the present invention, it is possible to provide a coating apparatus that is excellent in ease of cleaning and validation after the cleaning, and is excellent in quality and efficiency of the coating process.

### BRIEF DESCRIPTION OF THE DRAWINGS

In the accompanying drawings:
FIG. 1 is a partial longitudinal sectional view showing an overall construction of a coating apparatus according to an embodiment;
FIG. 2 is a partial longitudinal sectional view showing a rear portion of a rotating drum;
FIG. 3 is a partial longitudinal sectional view showing a rear portion of the rotating drum;
FIG. 4 is a perspective view illustrating the rotating drum;
FIG. 5 is a view showing an inner side of a first disc plate seen from the front;
FIG. 6 is a view of a second disc plate seen from the back;
FIG. 7 is a view showing an inner side of the first disc plate seen from the front and showing a protrusion 21b according to another embodiment;
FIG. 8A is a plan view of a protrusion according to further another embodiment of the present invention, and FIG. 8B is a sectional view thereof
FIG. 9A is a plan view of a protrusion according to further still another embodiment of the present invention, and FIG. 9B is a sectional view thereof; and

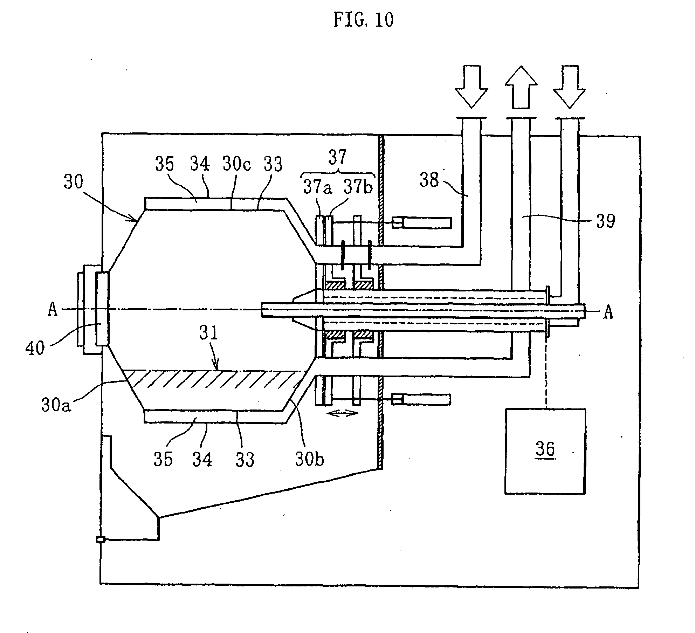

FIG. 10 is a longitudinal sectional view of a conventional coating apparatus.

### DETAILED DESCRIPTION OF THE PREFERRED EMBODIMENTS

Embodiments of the present invention will be hereinafter described with reference to the accompanying drawings.

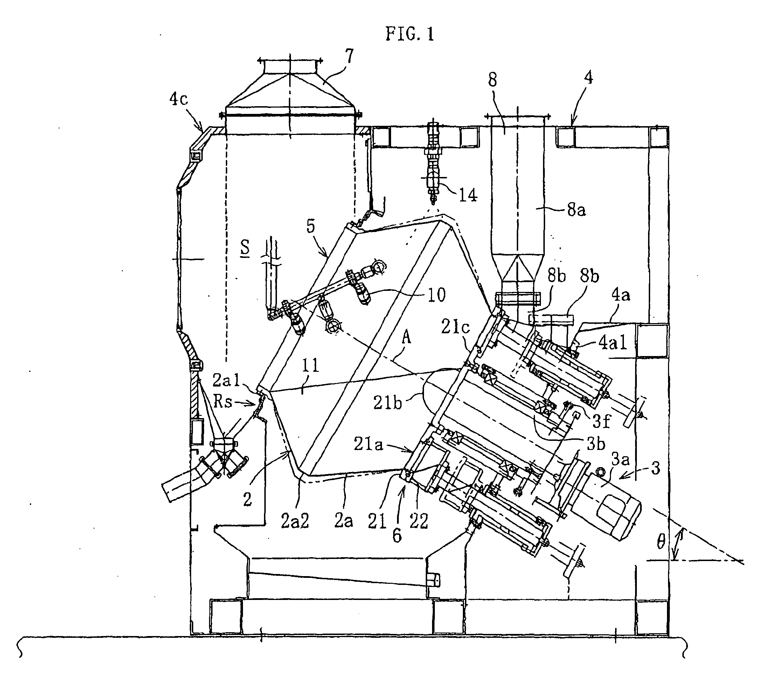

FIG. 1 shows a coating apparatus 1 according to a first embodiment. The coating apparatus 1 includes a rotating drum 2 disposed such as to be rotatable around an axis A that is inclined to the horizontal at a preset angle θ of, for example, 30°, and a rotary drive mechanism 3 for driving the rotating drum 2 in forward and/or reverse directions; the rotating drum 2 and the rotary drive mechanism 3 are accommodated inside a casing 4.

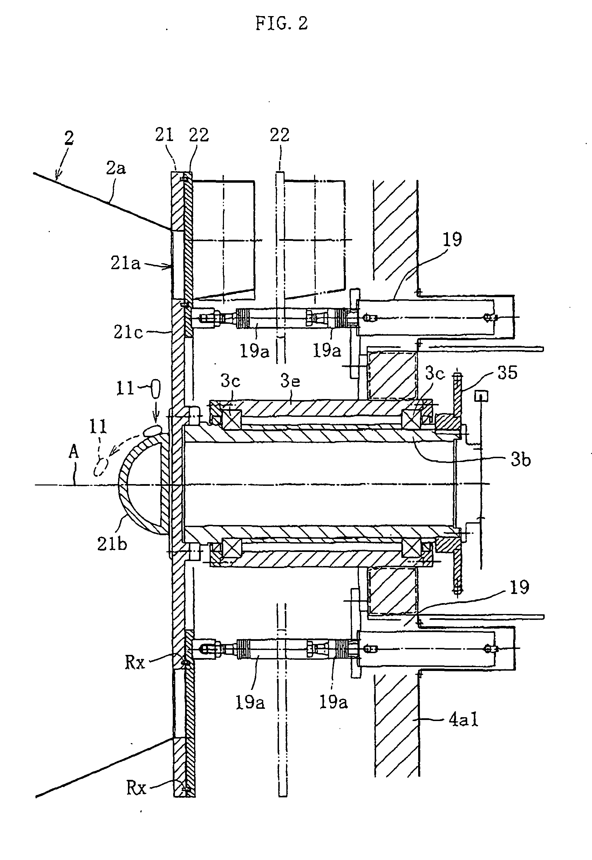

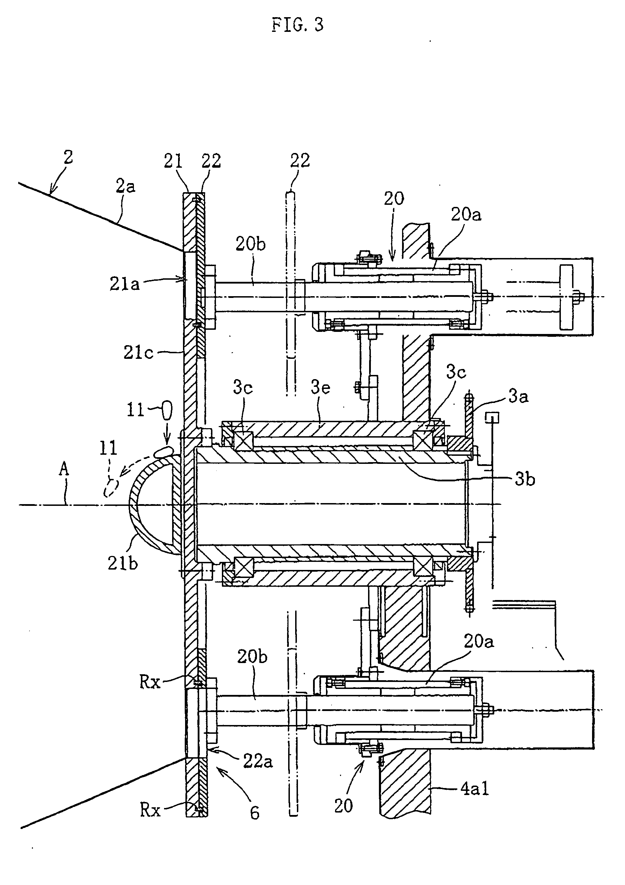

The rotary drive mechanism 3 has, by way of example, a construction in which the rotating force of a drive motor 3a with a reduction gear is input to a hollow drive shaft 3b that is connected to the rear end (lower side end) of the inclined rotating drum 2, via a chain (not shown) and a sprocket 3f. With this construction, the drive shaft 3b and the rotating drum 2 are rotatably supported by bearings 3c in an inclined wall 4a1, which is orthogonal to the axis A, of an inner partition wall 4a of the casing 4. To be more specific, a cylindrical housing 3e is fixed to the inclined wall 4al, the drive shaft 3b being inserted into an inner bore of the cylindrical housing 3e so that it is supported rotatably by the bearings 3c, as shown in FIGS. 2 and 3. The sprocket 3f is attached to the rear end of the drive shaft 3b so as to be rotatable therewith.

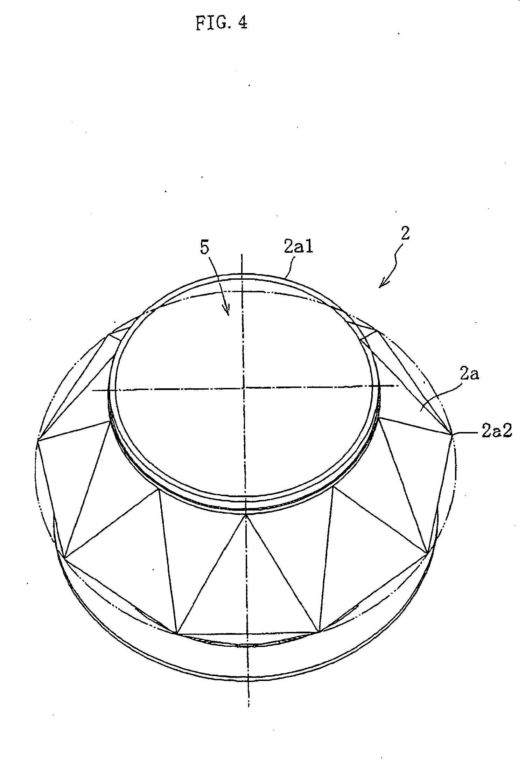

The rotating drum 2 includes, along its axis, a front end portion (upper side end), rear end portion (lower side end), and peripheral wall 2a that connects the front end portion and rear end portion, as shown in FIGS. 1 and 4. In this embodiment, the peripheral wall 2a is formed in a polygonal cylinder, i.e., it has a polygonal cross section, with its diameter gradually increasing from the sides of the front and rear end parts toward the center of the axis. Across-sectionalplane P1 containing the large diameter portion 2a2 of the peripheral wall 2a is a polygon (e.g. nonagon) that is orthogonal to the axis A. The peripheral wall 2a is formed of a metal plate such as stainless steel sheet that has no air holes or porous portions; both sides of the large diameter portion 2a2 where the diameter decreases gradually toward the front end portion and rear end portion are respectively formed by a plurality of triangles that have their apexes oriented to the front and to the back and are arranged alternately along the circumferential direction. The front end portion is constructed with a circular portion 2a1, while the rear end portion is constructed with a first disc plate 21 that forms a ventilation mechanism 6 to be described later. The front end portion is entirely open, thus forming an air vent 5 for the process gas such as dry air (either hot or cool). Note that, a baffle for mixing and stirring of a particle layer 11 may be provided on the inner surface of the peripheral wall 2a as required.

At a corner portion 4c at the upper front of the casing 4, or more specifically, in the upper wall near the corner portion 4c opposite the front end portion of the rotating drum 2, there is mounted an air duct 7, as shown in FIG. 1. Further, in the upper wall in the rear side of the casing 4, or more specifically, in the upper wall of the casing 4 above the rear end portion of the rotating drum 2, there is mounted another air duct 8.

In the upper front of the casing 4, there is formed a passage space S of the process gas that contains the air vent 5 of the rotating drum 2 and an air vent of the air duct 7, and this space S is sealed from the outside air by a labyrinth seal Rs. Further, in the rotating drum 2, there is provided a spray nozzle 10 for spraying a liquid such as a coating liquid.

The ventilation mechanism 6 is arranged on the side of the rear end portion of the rotating drum 2. The ventilation mechanism 6 includes the first disc plate 21 that constitutes the rear end portion of the rotating drum 2, and a second disc plate 22 arranged opposite the first disc plate 21, as shown in FIGS. 2 and 3. The first disc plate 21 rotates with the rotating drum 2, while the second disc plate 22 does not rotate. In this embodiment, the second disc plate 22 is slidable along the axial direction with respect to the first disc plate 21.

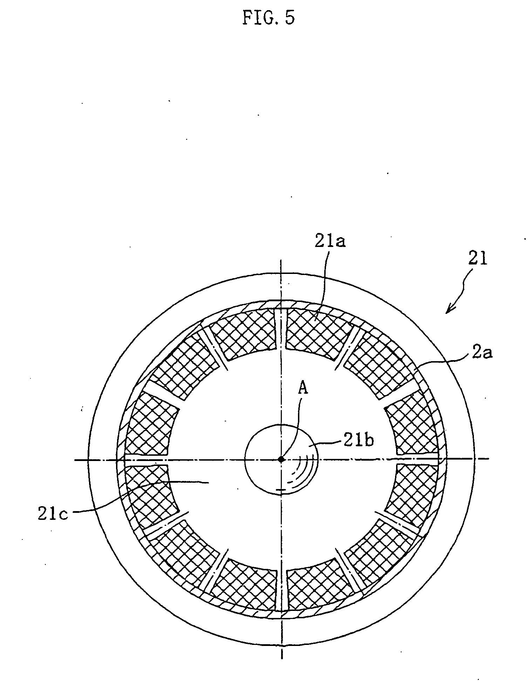

As shown in FIG. 5, the first disc plate 21 has an air vent 21a composed of porous portions that are arranged in a ring shape around the axis A of the rotating drum 2, and the drive shaft 3b shown in FIG. 1 is connected to the outer surface (rear surface) of the plate. In this embodiment, the air vent 21a is formed by attaching porous plates such as punched metal sheet onto a plurality of circumferentially spaced through holes formed in the main body of the first disc plate 21 along the aforementioned ring shape. The air vent 21a may extend continuously over the entire circumference of the ring shape. The outer peripheral edge of the air vent 21a substantially matches the lower end edge of the inclined peripheral wall 2a.

Further, a protrusion 21b is formed on a central region of an inner surface 21c of the first disc plate 21. In this embodiment, the protrusion 21b constitutes a hollow hemispherical configuration as shown in FIGS. 2 and 3. Further, in this embodiment, the protrusion 21b is arranged such that the center thereof coincides with the center (axis A) of the inner surface 21c. The protrusion 21b is fixed on the inner surface 21c by an appropriate means such as a bolt.

Meanwhile, the second disc plate 22 is an annular plate having a larger outside diameter and a smaller inside diameter than those of the air vent 21a of the first disc plate 21, and driven to slide in the direction along the axis A by a plurality of, e.g., two, fluid pressure cylinders, or in this case second air cylinders 19. To be more specific, the second air cylinders 19 are installed in parallel with the axis A in the inclined wall 4a1 of the inner partition wall 4a of the casing 4 at the back of the second disc plate 22 as shown in FIG. 2, and tips of piston rods 19a of the second air cylinders 19 are connected to the second disc plate 22. Further, a plurality of, e.g. , two, guide mechanisms 20 are disposed at the back of the second disc plate 22, as shown in FIG. 3. The guide mechanism 20 includes a guide member 20a fixed to the inclined wall 4a1 of the inner partition wall 4a of the casing 4, and a guide rod 20b supported by the guide member 20a such as to be slidable in a direction parallel to the axis A, and the second disc plate 22 is connected to the tip of this guide rod 20b.

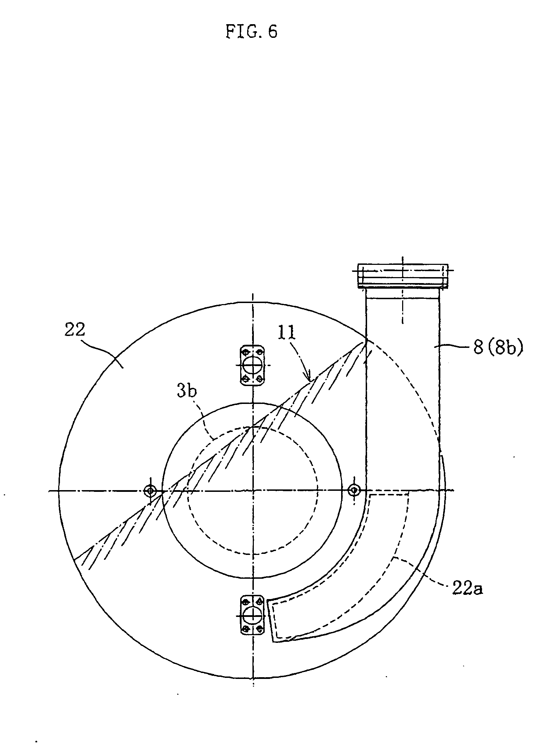

At a location in the lower portion of the second disc plate 22 is formed a connection hole 22a, as shown in FIG. 6, which illustrates the second disc plate 22 viewed from behind. When the rotating drum 2 rotates counterclockwise in the drawing during the processing of particles, the connection hole 22a is located, for example, in the area on the lower side of the horizontal center line of the second disc plate 22 and on the right side of the vertical center line in the drawing (lower and front side of the rotating direction). Generally speaking, the connection hole 22a of the second disc plate 22 is formed at a location where it overlaps the particle layer 11 during the rotation of the rotating drum 2 or during the processing of particles. Further, in this embodiment, the connection hole 22a is formed in the aforementioned area in a substantially quarter circular arc shape, its inside and outside diameters approximately matching those of the air vent 21a of the first disc plate 21.

Further, an air vent of the air duct 8 is connected to the outer or rear surface of the second disc plate 22 such as to cover the connection hole 22a, so that the air vent 21a of the first disc plate 21 communicates to the air duct 8 at a predetermined location where it overlaps the connection hole 22a of the second disc plate 22. Therefore, the interior of the rotating drum 2 and the air duct 8 communicate to each other always at the predetermined location where the air vent 21a of the first disc plate 21 overlaps the connection hole 22a of the second disc plate 22, during the rotation of the rotating drum 2.

The second disc plate 22 is pressed by the extended second air cylinders 19 to face the first disc plate 21 with a slight gap therebetween during the processing of particles, as indicated by the solid lines in FIG. 2. The gap between the opposing surfaces of the first disc plate 21 and second disc plate 22 is sealed by a labyrinth seal Rx. Two labyrinth seals Rx are provided respectively on the outer and inner peripheral sides of the air vent 21a of the first disc plate 21 and connection hole 22a of the second disc plate 22. The second disc plate 22 is driven to slide in the axial direction by the retracting movement of the second air cylinders 19 to separate from the first disc plate 21 when discharging particle products or inspecting the apparatus after cleaning, as indicated by chain lines shown in FIG. 2.

The air duct 8 is constructed separable inside the casing 4 as shown in FIG. 1; it is separated when the second disc plate 22 slides to separate from the first disc plate 21. That is, the air duct 8 includes a first portion 8a attached to the upper wall of the casing 4 and a second portion 8b attached to the second disc plate 22, and the joint surfaces of the first and second parts 8a and 8b are joined to each other with a sealing member therebetween such as an O-ring attached to at least one of them, during the processing of particles. When the second disc plate 22 slides to separate from the first disc plate 21 in this state, as indicated by the imaginary lines in the drawing, the second portion 8b moves with the second disc plate 22 and separates from the first portion 8a. At this time, the second portion 8b moves diagonally downwards in the direction along the axis A in which the second disc plate 22 slides, and therefore the separation of the second portion 8b from the first portion 8a takes place smoothly.

During a coating process of particles such as tablets using the coating apparatus 1 of this embodiment, process gas such as dry air is supplied into and exhausted from the inside of the rotating drum 2 through the air vent 5 at one end of the rotating drum 2 and the air vent 21a at the other end. In this embodiment, the one end side of the rotating drum 2 is constructed as the inlet side and the other end side as the outlet side. In this case, the air vent 5 at one end of the rotating drum 2 is an air inlet (hereinafter referred to as "air inlet 5"), the air duct 7 at one end is an air inlet duct (hereinafter referred to as "air inlet duct 7"), the air vent 21a at the other end is an air outlet (hereinafter referred to as "air outlet 21a"), and the air duct 8 at the other end is an air outlet duct (hereinafter "air outlet duct 8"). Not tomention, one end side of the rotating drum 2 may be constructed as an outlet side, and the other end side as an inlet side, depending on the conditions of use or processing.

Particles to be coated are poured into the rotating drum 2 from the air vent (opening) 5 at one end of the rotating drum 2. The rotating drum 2 is driven by the rotary drive mechanism 3 to rotate about the axis A that is inclined to the horizontal at a preset angle θ; with the rotation of the rotating drum 2, the particles inside are stirred and mixed to form the particle layer (rolling bed) 11. Since the axis A of the rotating drum 2 is inclined at the preset angle θ, the surface layer of the particle layer 11 bridges, in the direction of the axis A, between the peripheral wall 2a of the rotating drum 2 and the first disc plate 21 at the rear end portion as shown in FIG. 1, and in the rotating direction, the surface layer is lifted up diagonally from the back side to the front side of the rotating direction, as shown in FIG. 6.

A liquid such as a coating liquid is sprayed from the spray nozzles 10 onto the above particle layer 11. The liquid sprayed on the particle layer 11 is spread over the surface of each one of the particle grains by the stirring and mixing effects to the particle layer 11 given by the rotation of the rotating drum 2.

The liquid sprayed and spread over the surface of the particle grains is dried by the process gas such as hot air supplied into the rotating drum 2. The process gas flows into the rotating drum 2 from the air vent of the air inlet duct 7 through the air inlet 5 at one end of the rotating drum 2, passes through inside the particle layer 11, and flows out through the air outlet 21a of the first disc plate 21 and connection hole 22a of the second disc plate 22 into the air outlet duct 8. As the process gas passes through inside the particle layer 11, the liquid sprayed and spread over each of the particle grains is evenly dried, whereby a high quality coating is formed.

During the coating process, cold or hot water may be sprayed from the spray nozzles 14 disposed in the upper wall of the casing 4 toward the peripheral wall 2a of the rotating drum 2 as required, so as to cool or heat the rotating drum 2 from outside. For example, the rotating drum 2 may be cooled for sugar coating, or heated for chocolate coating, and for film coating, it may be cooled or heated according to the processing conditions Cool or hot air, or a heater such as an infrared heater may be used as cooling/heating means, instead of the cool or hot water.

With the coating apparatus 1 of this embodiment in which the axis A of the rotating drum 2 is inclined to the horizontal at a predetermined angle θ, the volume of particles that can be processed in the rotating drum 2 thus increases, so it is possible to improve a production-efficiency by increasing a processing volume per rotation compared to the conventional device.

Further, the rotating drum 2 rotates around the inclined axis A, so, as the rotation drum 2 rotates, the particles contained in the rotation drum 2 flows in both the rotational direction and the axial direction. Therefore, the stirring and mixing effect for the particle layer is high. In particular, according to the rotation drum 2 of this invention, the peripheral wall 2a is formed in a polygonal cylindrical shape, thereby promoting the flow of the particles in the rotational direction. Further, in the central region of the inner surface 21c of the other end (first disc plate 21) positioned on the lower side of the inclined rotation drum 2, there is formed the protrusion 21b. As shown in FIGS. 2 and 3, the particles 11 in the vicinity of the other end (first disc plate 21), which is lifted forward in the rotational direction as the rotating drum 2 rotates, is brought into contact with the surface of the protrusion 21b when the particles 11 flows backward in the rotational direction due to its own weight (gravitationally), and is then guided by the surface of the protrusion 21b to thereby flow toward the inclined upper side. As a result, the stagnation phenomenon of the particles 11 in the vicinity of the other end (first disc plate 21) is less likely to occur. By those flow promoting effects (stirring and mixing promoting effect), a local over wetting, dry spots, or the like of the particle layer 11 is prevented, thereby improving the quality of the coating processing and increasing a product yield.

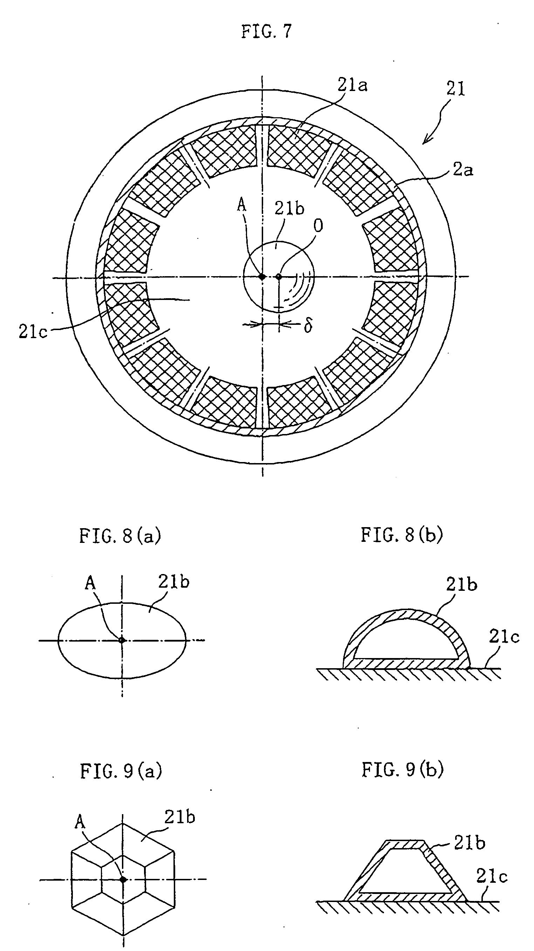

In the embodiment shown in FIG. 7, the center O of the protrusion 21b is offset from the center (axis A) of the inner surface 21c for a predetermined amount δ. With such the protrusion 21b, the flow promoting effect for the particles in the vicinity of the other end (first disc plate 21) toward the inclined upper side as described above can be obtained. At the same time, the flow promoting effect for the particles in the rotational direction can also be obtained.

Further, the configuration of the protrusion 21b is not limited to the hemispherical configuration, and may be other configurations. For example, as shown in FIGS. 8A and 8B, the protrusion 21b may be formed to have an elliptical hemisphere. Further, as shown in FIGS. 9A and 9B, the protrusion 21b may be of a polygonal pyramid shape having a flat vertex (while in an example shown in FIG. 9 it is of a hexagonal pyramid shape, it may be of a square pyramid shape, a triangular pyramid shape, or the like). In the case of the protrusion 21b shown in these examples, the flow promoting effect for the particles in the rotational direction can also be obtained. Further, the configuration of the protrusion 21b is not limited to the hollow configuration and may be a solid configuration. Moreover, the number of protrusion is not limited to one, and a plurality of protrusions may be provided. In this case, it is preferable that the plurality of protrusions be arranged such that the centers thereof be offset for the same distance from the center (axis A) of the inner surface.

## Claims

1. A coating apparatus (1) comprising a ventilated-type rotating drum (2) in which particles to be processed can be accommodated and which is driven to rotate about an axis (A) of the rotating drum (2),
wherein the rotating drum (2) is arranged so that the axis (A) of the rotating drum (2) is inclined with respect to a horizontal,
wherein the rotating drum (2) comprises:
a first end provided on an inclined upper side and a second end provided on an inclined lower side along a direction of the axis (A), the second end being constituted with a disc plate (21) that forms a ventilation mechanism (6); and
a peripheral wall (2a) that connects the first end and the second end,
wherein each of the first end and the second end is provided with an air vent, the air vent (21a) of the second end being composed of porous portions arranged in a ring shape around the axis (A) of the rotating drum (2),
**characterized in that,**
at least one protrusion (21 b) is provided on a central region of an inner surface of the second end, the central region extending within the inner diameter side of the air vent (21a) of the second end, the protrusion (21b) having a configuration such that when particles in the vicinity of the second end are lifted forward in a rotational direction as the rotation drum rotates (2) and then flow gravitationally, the particles come into contact with a surface of the protrusion (21 b) to flow obliquely towards the inclined upper side while being guided by the surface of the protrusion (21 b).

## Patentansprüche

1. Beschichtungsvorrichtung (1) mit einer rotierenden Trommel (2) des belüfteten Typs, in der zu verarbeitende Teilchen aufgenommen werden können und die so angetrieben wird, dass sie sich um eine Achse (A) der rotierenden Trommel (2) dreht,
wobei die rotierende Trommel (2) so angeordnet ist, dass die Achse (A) der rotierenden Trommel (2) in Bezug auf eine Horizontale geneigt ist,
wobei die rotierende Trommel (2) Folgendes aufweist:
ein erstes Ende, das an einer geneigten oberen Seite vorgesehen ist, und ein zweites Ende, das an einer geneigten unteren Seite entlang einer Richtung der Achse (A) vorgesehen ist, wobei das zweite Ende so beschaffen ist, dass dort eine Scheibenplatte (21) vorliegt, die einen Belüftungsmechanismus (6) bildet, und
eine Umfangswand (2a), die das erste Ende mit dem zweiten Ende verbindet,
wobei jedes der ersten und zweiten Enden mit einer Be- bzw. Entlüftungsöffnung versehen ist und die Be- bzw. Entlüftungsöffnung (21 a) des zweiten Endes sich aus durchlässigen Bereichen zusammensetzt, die in Ringform um die Achse (A) der rotierenden Trommel (2) angeordnet sind,
**dadurch gekennzeichnet, dass**
mindestens ein Vorsprung (21b) an einem zentralen Bereich einer Innenfläche des zweiten Endes vorgesehen ist, wobei sich der zentrale Bereich innerhalb der Innendurchmesserseite der Be- bzw. Entlüftungsöffnung (21 a) des zweiten Endes erstreckt, und wobei der Vorsprung (21 b) so konstruiert ist, dass, wenn Teilchen in der Nähe des zweiten Endes bei der Drehung der rotierenden Trommel (2) in Rotationsrichtung nach vorn angehoben werden und dann unter dem Einfluss der Gravitation fließen, die Teilchen mit einer Oberfläche des Vorsprungs (21 b) in Kontakt kommen und schräg in Richtung zu der geneigten oberen Seite fließen, während sie durch die Oberfläche des Vorsprungs (21 b) geführt werden.

## Revendications

1. Appareil de revêtement (1) comprenant un tambour rotatif de type ventilé (2) dans lequel les particules devant être traitées peuvent être reçues et qui est entraîné à rotation autour d'un axe (A) du tambour rotatif (2),
où le tambour rotatif (2) est agencé de sorte que l'axe (A) du tambour rotatif (2) soit incliné par rapport à une horizontale,
où le tambour rotatif (2) comprend :
une première extrémité prévue sur un côté supérieur incliné et une deuxième extrémité prévue sur un côté inférieur incliné le long d'une direction de l'axe (A), la deuxième extrémité étant constituée d'une plaque en forme de disque (21) qui forme un mécanisme de ventilation (6) ; et
une paroi périphérique (2a) qui relie la première extrémité et la deuxième extrémité,
où chacune parmi la première extrémité et la deuxième extrémité est munie d'un évent, l'évent (21a) de la deuxième extrémité étant composée de parties poreuses agencées dans une forme annulaire autour de l'axe (A) du tambour rotatif (2),
**caractérisé en ce que**,
au moins une saillie (21b) est prévue sur une région centrale d'une surface intérieure de la deuxième extrémité, la région centrale s'étendant dans le côté de diamètre intérieur de l'évent (21a) de la deuxième extrémité, la saillie (21 b) ayant une configuration telle que quand des particules au voisinage de la deuxième extrémité sont soulevées vers l'avant dans une direction de rotation à mesure que le tambour rotatif tourne (2) et ensuite s'écoulent par gravitation, les particules viennent en contact avec une surface de la saillie (21b) pour s'écouler obliquement vers le côté supérieur incliné tout en étant guidées par la surface de la saillie (21b).
